# EUROPEAN PATENT APPLICATION

(11) **EP 2 555 541 A1**
(43) Date of publication of application: **06.02.2013**
(21) Application number: 12000242.3
(22) Date of filing: 17.01.2012
(51) Int. Cl.: H04N 21/488, H04N 21/431, H04N 5/445, H04N 21/81, H04N 21/8543, H04N 21/472

(54) **Apparatus and method for controlling display of information on a television**

(30) Priority: 01.08.2011 KR 20110076415
(71) Applicant: LG ELECTRONICS INC., Yeongdeungpo-gu Seoul 150-721 (KR)
(72) Inventor: Oh, Kyungyoon, Jinwi-myeon Pyeongtaek-si Gyeonggi-do 451-731 (KR); Han, Mikyung, Jinwi-myeon Pyeongtaek-si Gyeonggi-do 451-731 (KR); Kim, Jaehan, Jinwi-myeon Pyeongtaek-si Gyeonggi-do 451-731 (KR); Woo, Jungkil, Jinwi-myeon Pyeongtaek-si Gyeonggi-do 451-731 (KR)
(74) Representative: Beyer, Andreas

(57) **Abstract**

An apparatus for a television includes a first storage area to store a plurality of messages, a second storage area to store set-up information for messages, and a processor to perform control functions. The control functions include generating a message based on at least one command signal received through an interface and to control output of the generated message based on the set-up information stored in the second storage area. The content of the message is controlled based on the at least one command signal, and the set-up information provides a condition for outputting the message.

## Description

This application claims the benefit of the Korean Patent Application No. 10-2011-0076415, filed on August 1, 2011, the contents of are incorporated by reference.

### BACKGROUND

### 1. Field

One or more embodiments herein control display of information.

### 2. Background

Displaying messages and other types of information on mobile terminals has become commonplace. However, televisions (TVs), monitors and other types of display devices, and especially those used in a home, office, business, or commercial setting, have not been equipped with personalized messaging capability.

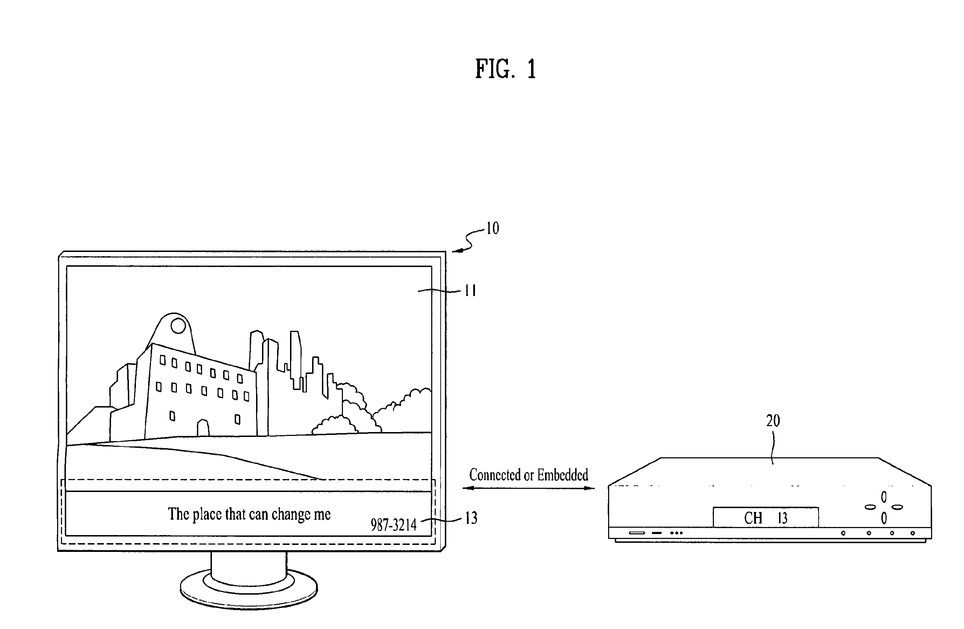

Moreover, FIG. 1 shows a television that displays text with a broadcast program. In this arrangement, the television is coupled to an external device (e.g., a set-top box) and text is displayed in one area and a broadcast program in another area of a screen. The television, however, does not simultaneously display a personalized or custom message and a broadcast program. Also, while it is known to display information along a bottom portion of a screen (e.g., known as a crawl) while a broadcast program is being shown, the message is placed over the program thereby obscuring some of its contents.

### BRIEF DESCRIPTION OF THE DRAWINGS

- FIG. 1: shows a television that displays text with a broadcast program.
- FIG. 2: shows one embodiment of a multimedia device.
- FIG. 3: shows selecting a messaging function in a multimedia device.
- FIG. 4: shows an embodiment for displaying and generating messages.

- FIG. 5: shows an embodiment for composing or editing a message.
- FIG. 6: shows an embodiment or deleting one or more messages.
- FIG. 7: shows another embodiment for controlling message deletion.
- FIG. 8: shows an embodiment for generating a message.
- FIG. 9: shows templates to set a display area for a message.
- FIG. 10: shows templates to set a format and content of a message.
- FIG. 11: shows a history of messages and content set for messages.
- FIG. 12: shows a screen for setting attributes of a message.
- FIG. 13: shows a screen to set photos for a message.
- FIG. 14: shows a screen to control display of a message.
- FIG. 15: shows an example of a screen displaying a generated message.
- FIG. 16: shows another example of a generated message.
- FIG. 17: shows one way a message may be changed or controlled.
- FIG. 18: shows another way a message may be changed or controlled.
- FIG. 19: shows one way of controlling display of a message.
- FIG. 20: shows one type of remote controller for a multimedia device.
- FIG. 21: shows a detailed configuration module of the remote controller.
- FIG. 22: shows a method for controlling the display of messages.
- FIG. 23: shows the display of messages in different areas of a screen.

- FIG. 24: shows another method to control display of messages.

### DETAILED DESCRIPTION

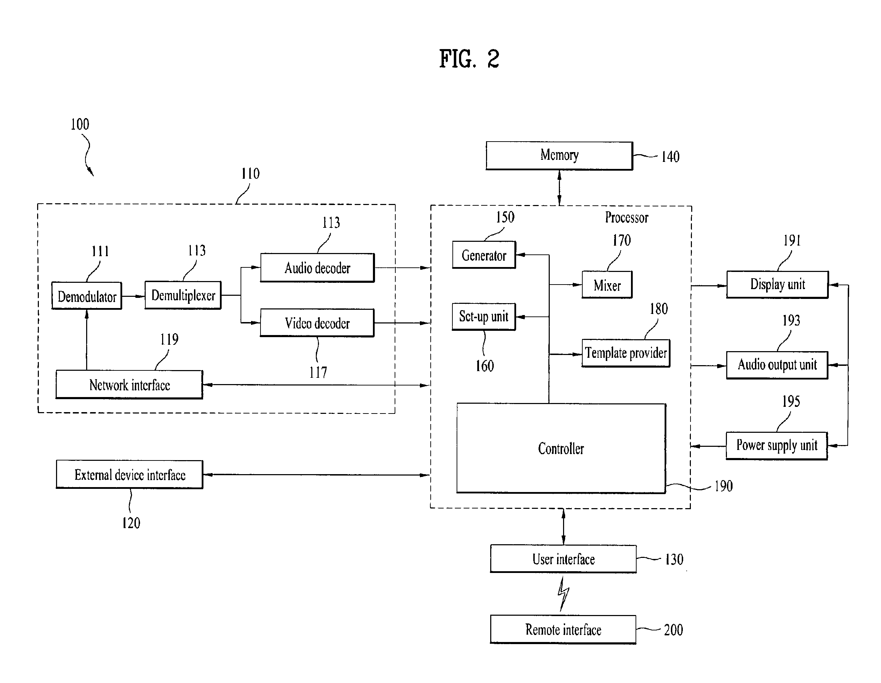

FIG. 2 shows one embodiment of a multimedia device 100 that includes a broadcast receiver 110, an external device interface 120, a user interface 130, a memory 140, a generator 150, a set-up unit 160, a mixer 170, a template provider 180, a controller 190, a display unit 191, an audio output unit 193, and a power supply unit 195.

The broadcast receiver 110 may include a demodulator 111, demultiplexer 113, audio decoder 115, video decoder 117, and network interface 119. In an alternative embodiment, broadcast receiver 110 may be designed to include the demodulator 111 and the demultiplexer 113 and not include the network interface 119. Conversely, the broadcast receiver 110 may be designed to include network interface 119 and not include demodulator 111 and demultiplexer 113.

The network interface 119 may receive a broadcast signal including audio data and video data. And, accordingly, the network interface 119 may be provided with tuner for receiving such broadcast signals. Herein, such tuner may be configured to select a radio frequency (RF) broadcast signal corresponding to a channel selected by the user, or an RF broadcast signal corresponding to all of the pre-stored channels, among multiple RF broadcast signals being received through an antenna.

Also, in order to access a network via wired connection, the network interface 119 may, for example, be equipped with an Ethernet terminal. Additionally, in order to access a network via wireless connection, the network interface 119 may use one or more communication standards such as Wireless Lan (WLAN) (or Wi-Fi), Wireless Broadband (Wibro), World Interoperability for Microwave Access (Wimax) or High Speed Downlink Packet Access (HSDPA). Furthermore, among the applications open in the air, the network interface 130 may select and receive a wanted application through the network.

The demodulator 111 receives a digital IF (DIF) signal converted by the network interface 119 or the tuner and performs a demodulation operation on the received DIF signal.

The demultiplexer 113 demultiplexes the audio data and the video data included in the demodulated broadcast signal. Herein, the demultiplexed audio data are decoded by the audio decoder 115, and the demultiplexed video data are decoded by the video decoder 117.

The decoded audio data and video data are inputted to the controller 190. And, after performing additional operations, the controller 190 outputs the processed image to the display unit 191 and outputs the processed sound to audio output unit 193.

The external device interface 120 may access the external device and the network device. In order to do so, the external device interface 120 may include an A/V input/output unit (not shown) or a wireless communication unit (not shown).

The external device interface 120 may access one or more external devices such as a digital versatile disk (DVD) player, a Blu-ray disk (BD) player, a gaming device, a camera, a camcorder, or a computer (i.e., desktop or laptop computer) via a wired and/or wireless connection. Furthermore, the external device interface 120 may receive an application or an application list stored in a neighboring external device. Then, external device interface 120 may deliver the received application or application list to the controller 190 or the memory 140.

The memory 140 may be configured of an Electrically Erasable Programmable Read-Only Memory (EEPROM). Herein, the memory 140 may store a program for processing and controlling each signal within the controller 190, or the memory 140 may also store signal-processed images, sound, or data signals.

Additionally, memory 140 may perform the function of temporarily storing the image, sound, and/or data signals input from the external device interface 120 or network interface 119. Furthermore, memory 140 may store an application or list of applications input from the external device interface 120 or network interface 119.

The user interface 130 may deliver the signal inputted by the user to the controller 190, or the user interface 130 may deliver the signal outputted from the controller 190 to the user. For example, the user interface 130 may receive an input signal, such as a power on/off signal, a channel selection signal, a screen set-up signal, and so on, from the remote controller 200 and may process the received signal. Or, the user interface 130 may process a control signal outputted from the controller 170 so that the processed signal can be transmitted by the remote controller 200.

The display unit 191 respectively converts each of the video signal, data signal, OSD signal, and so on, processed by the controller 190, or each of the image signal, data signal, and so on, received from the external device interface 120 to R, G, and B signals, so as to generate drive signals. For example, the display unit 191 may be a PDP, LCD, an OLED, a flexible display, a 3-dimensional (3D) display, or another type of display device.

The audio output unit 193 may be configured to receive the audio-processed signals from the controller 190, e.g., stereo signals, 3.1 channel signals, 5.1 channel signals, 6.1 channel signals, 7.1 channel signals or other types of signals, and to output the received audio signals in the form of sound. The audio output unit 193 may be configured of diverse forms of speakers.

The power supply unit 195 may supply corresponding power throughout the entire multimedia device 100. For example, the power supply unit 195 may supply respective power to the controller 190, which may be configured to have a system on chip (SOC) structure, to display unit 191, which is configured to display images, and to the audio output unit 193, which is configured to output the processed audio (or sound).

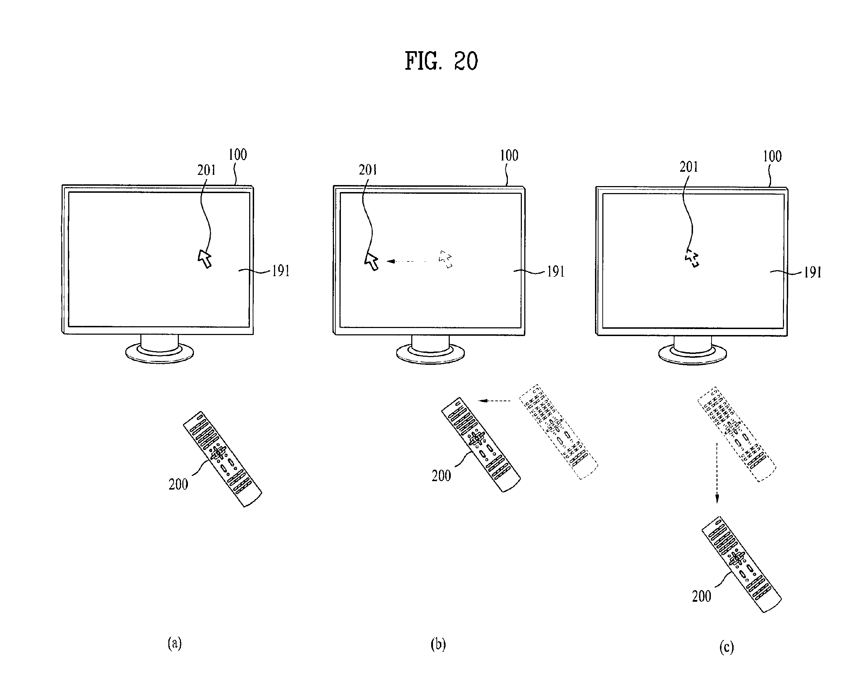

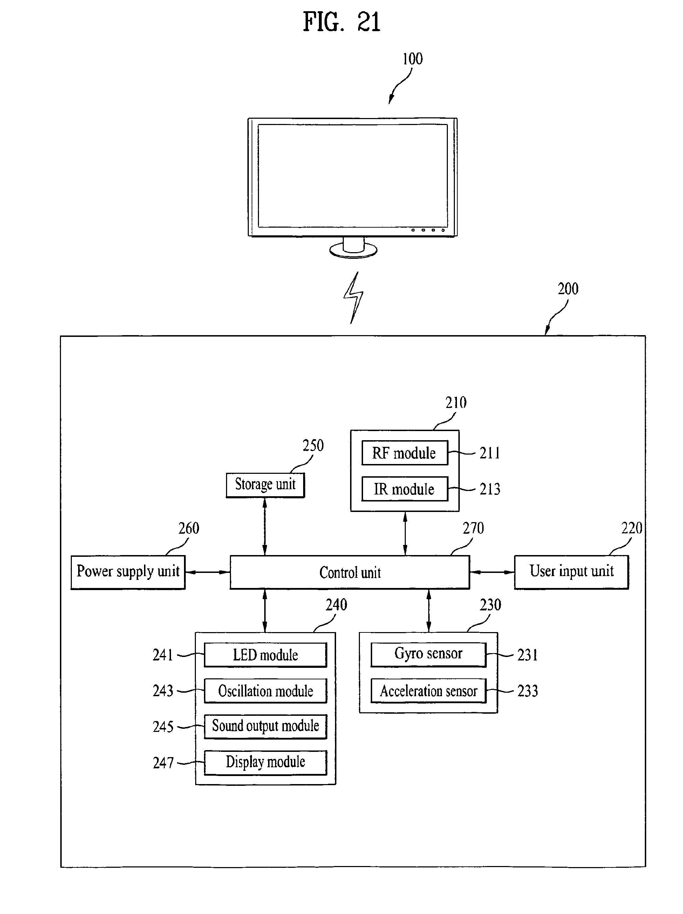

The remote controller 200 transmits a user input to the user interface 130. In order to do so, the remote controller 200 may use Bluetooth, radio frequency (RF) communication, infrared (IR) communication, Ultra Wideband (UWB), ZigBee, ir or another type of standard. The remote controller 200 will be described in more detail later on with reference to FIG. 20 and FIG. 21.

The generator 150 may generate a message in accordance with a command input through the user interface 130. And, the set-up unit 160 may configure the conditions according to which the generated message may be executed. Thereafter, the generated message and the configured conditions for executing the generated message (or message execution message) may be stored in the memory 140.

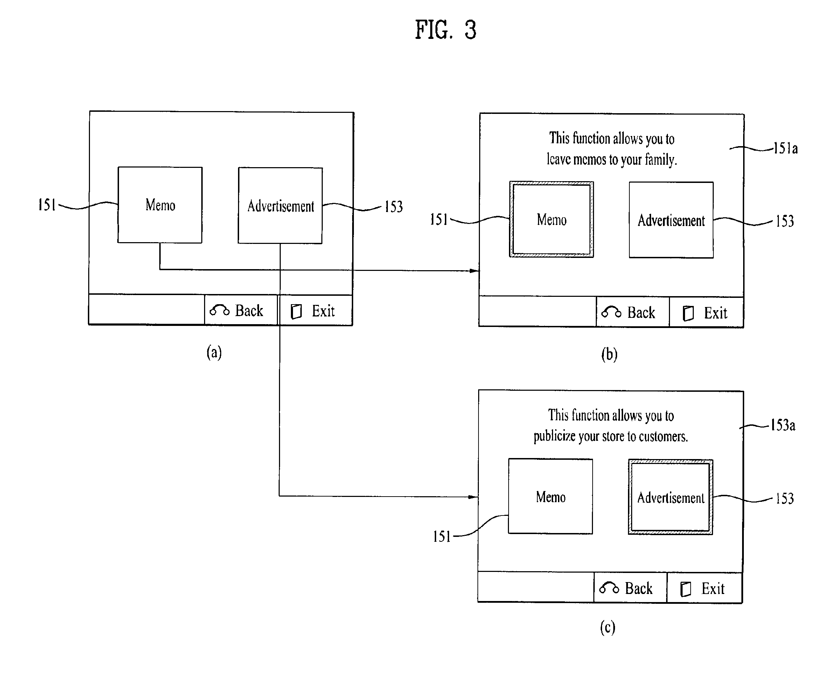

The inputted command may correspond to a command signal related to the generation of a message, which the user seeks to display through the multimedia device 100. Herein, the command may include all types of command signals associated with message composition, message editing, message deletion, and so on. Also, the above-described command may also include a command for selecting a message function which includes a memo (or memo pad) function or an advertisement function. This will hereinafter be described in more detail with reference to FIG. 3.

FIG. 3 shows an example of selecting a message function from the multimedia device according to an exemplary embodiment of the present invention. As shown in (a) of FIG. 3, any one of a memo function 151, which enables the user to leave a memo addressed to any member of his or her family, and an advertisement function 153, which enables a store (restaurant, shop, store, and so on) to advertise itself, may be selected.

First, the memo function 151 provides another way of communication between members of the family. Most particularly, in case of households in which the family members spend little time together during the day due to their different daily schedules, the memo function 151 may act as an efficient way for communication between each family member by notifying family events (weddings, funerals, and other family gatherings), by checking up on the schedule of each family (especially when the parents need to check up on their children), and by reminding one another of the time and details on important family meetings.

Generally, members of the same family tend to communicate with one another by sending out text messages through their mobile terminals. However, once they return to their home, they tend to forget the contents of the received messages. Yet, by using memo function 151, when any member of the family turns on the TV receiver, or while any member of the family is viewing a program through the TV receiver, the corresponding member of the family may read the memo left by another member of the family for him or her to see. Thus, the memo function 151 may have a maximized message delivery (or conveying) effect.

Additionally, the advertisement function 153 may provide a shop or restaurant owner with a natural method for advertising his (or her) store (or shop or restaurant) to customers or visitors. Generally, television receivers, which are installed within the premises of a store (or shop or restaurant), tend to be viewed by actual customers visiting the store or potential customers walking by the store. Most particularly, the television receivers installed in the restaurants are mostly viewed by the customers while they are enjoying their meal, and television receivers installed outside convenience stores, or outside the restaurants, are viewed by customers occupying the seats provided in the terrace, while they are enjoying snacks, beverages, and so on.

Therefore, when shop owners use the advertisement function 153 according to the present invention, the shop owner may allow the current or potential customers to view an advertisement message displayed on a portion of the TV screen while watching a broadcast program that is displayed on the TV receiver. Thus, by naturally displaying advertising messages to the customers, the advertisement effect may be maximized, and the customers may experience less discomfort in being interrupted from viewing a program to be forced to watch an unwanted advertisement.

When the memo function 151 is selected in (a) of FIG. 3, a memo function 151 tab may be focused (or emphasized), and a description 151a on the selected memo function may be displayed, as shown in (b) of FIG. 3. And, when the advertisement function 153 is selected in (a) of FIG. 3, an advertisement function 153 tab may be focused (or emphasized), and a description 153a on the selected advertisement function may be displayed, as shown in (c) of FIG. 3.

Although FIG. 3 shows an example of selecting any one of two functions, in other embodiments a wider selection of functions may be provided. In other words, the user may be able to select from more than two functions.

The template provider 180 may provide a template related to message generation or configurations of the conditions for executing a generated message through the user interface 130. Generally, a template refers to a format (shape), an outline, or model that is used as a guide for creating a document, item, program, and so on. In accordance with one embodiment, a template may refer to a basic form or format provided to the user for the purpose of generating (or creating) a message.

Therefore, the template provider 180 provides a template related to at least one of the contents of a message, elements of the message, size of the area in which the message is displayed, a frame within the screen related to a layout (or positioning) of the decoded video data and the message, and the effect of the message. Also, as shown in FIG. 3, when the functions of the message are separately selected, the template provider 180 may provide a template for each function of the message. Hereinafter, a process for generating a message according to a first embodiment of the present invention, when the memo function 151 is selected from (a) of FIG. 3, will be described in more detail.

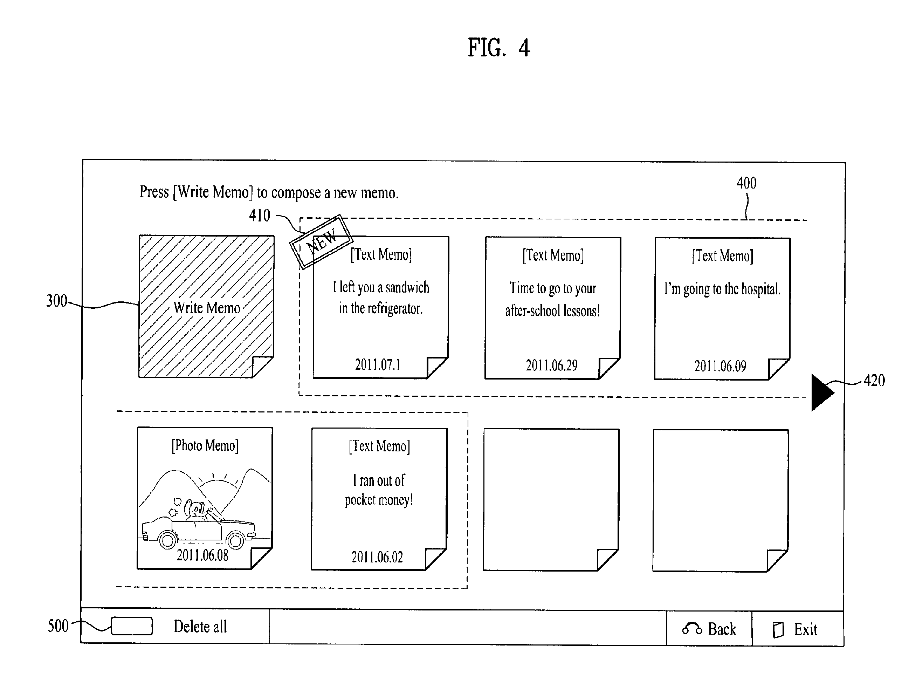

FIG. 4 shows one embodiment of a message generator. As shown in FIG. 4, when the memo function 151 is selected as the function of a message in (a) of FIG. 3, a Compose Memo menu 300 for generating a message and previously composed memos 400 may be simultaneously displayed.

A message may be newly generated (or created) by clicking on the Compose Memo 300 menu. Herein, the message may be generated to include at least any one of text, sound, picture (drawing), photo (still image), moving picture, and multimedia.

The previously composed memos 400 correspond to memos that have been composed previously (or earlier) and stored. Herein, a message type, contents of the message, and the created date of the message may be indicated in the previously composed memos 400. Also, unread memos may be separately marked with a distinctive mark 410, so as to provide convenience to the user when verifying memos.

In case the number of composed memos exceeds a number of memos that can be displayed in a single page, an arrow 420 is displayed so as to allow the user to turn to the next page. Or, when there is an excessive number of memos, or when the user has verified all of the composed memos, a Delete menu 500 may be displayed, so as to enable the user to delete the verified or unwanted messages.

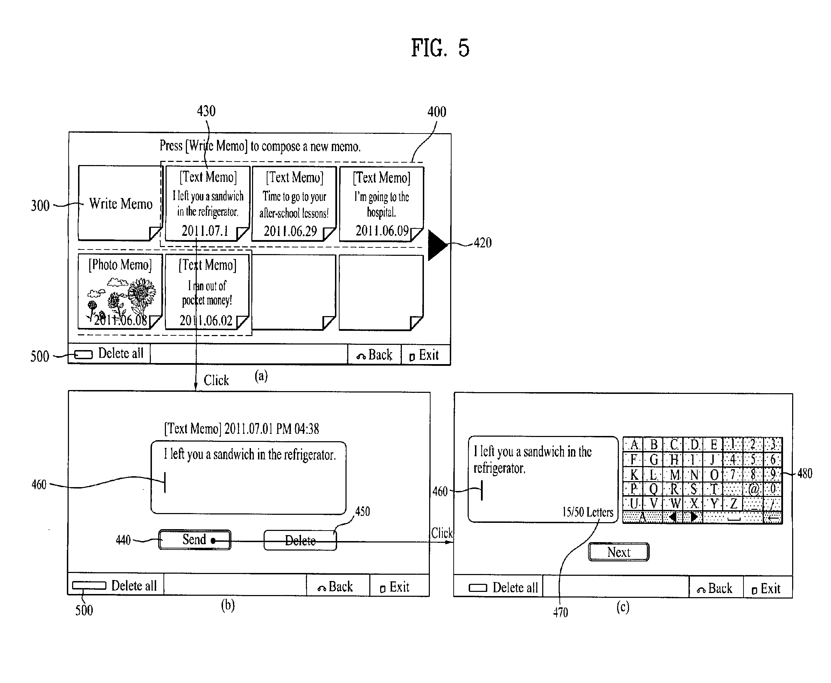

FIG. 5 shows an example of editing the message shown FIG. 4. By editing a previously composed message, the user may input new settings so that another user can verify the edited message, or the user may delete only the selected message.

In (a) of FIG. 5, when the user clicks on a message 430 he (or she) wishes to edit, among a plurality of previously composed messages 400, the user selects whether to Send 440 the edited message to another user or to Delete 450 the selected message, as shown in (b) of FIG. 5.

Then, as shown in (b) of FIG. 5, when the user selects Send 440 to another user, a cursor 460 may blink within the content of the message, so that the user can edit the content of the selected message, and a virtual keyboard 480 may be displayed. Accordingly, the user may use the virtual keyboard 480 to add new contents in the selected message or to recompose the message. At this point, when using the virtual keyboard 480, the user may use the remote controller 480. This process will be described in more detail later on with reference to FIG. 20 and FIG. 21.

This example relates to sending simple memos between members of the same family. In this case, the size of the message may be limited. Accordingly, a number of currently input letters (or characters)/a maximum number of input letters (or characters) 470 may be displayed on the edit screen. And, in case the message is not a text message, a used memory size/an available memory size may be displayed instead.

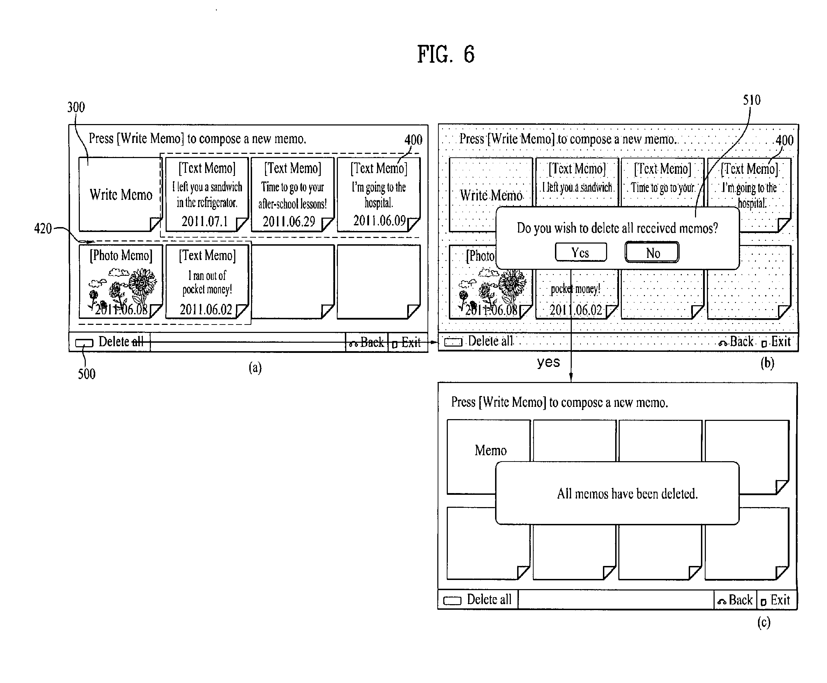

FIG. 6 shows an example of deleting the message shown FIG. 4. As shown in FIG. 5, a composed message may be edited or deleted. However, when deleting an entire previously composed message, since it is inconvenient to individually delete each message, FIG. 6 shows an example of collectively delete the entire list of messages.

In (a) of FIG. 6, when the user clicks on a Select All menu 500, a menu 510 verifying whether or not the user wishes to delete all of the received memos, as shown in (b) of FIG. 6. Thereafter, when the user selects Select All, all of the messages are deleted, as shown in (c) of FIG. 6, and a notification message notifying that all messages have been deleted is displayed. If Select All is not selected, the process step returns to (a) of FIG. 6.

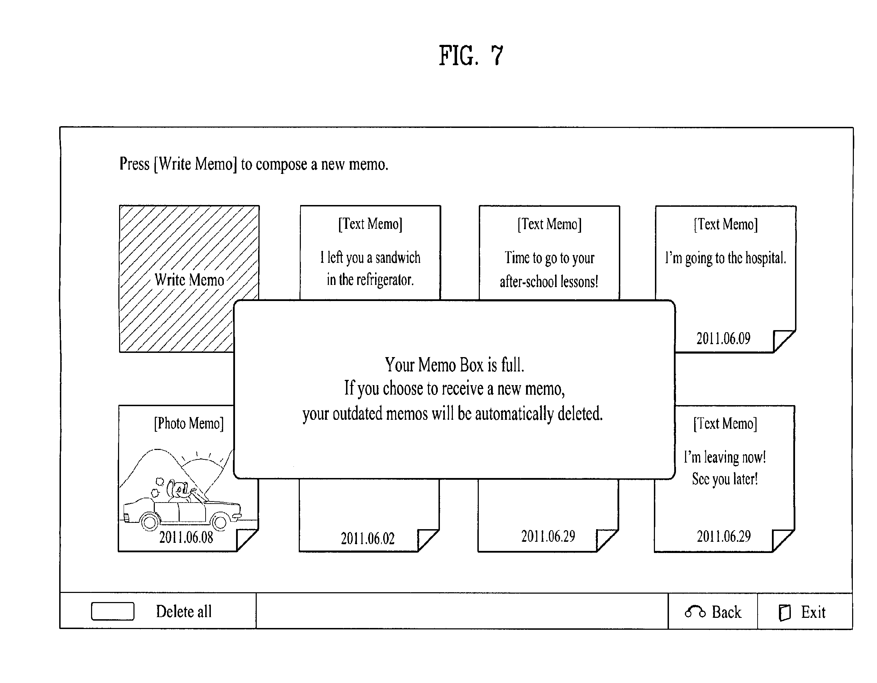

FIG. 7 shows another example of deleting the message shown FIG. 4. If the user continues to only create (or generate) new messages without deleting any of the previously composed messages, the memory 140 may lack capacity or a load may occur in the system. Therefore, in the example shown in FIG. 7, if a number of messages that can be stored is predetermined, and when the user wishes to create a number of messages exceeding the predetermined number, since a memo box becomes full, a notification, which notifies the user that the oldest messages will be automatically deleted when creating new messages, may be displayed to the user in the form of a pop-up message. Then, once the process of creating a message is completed, the oldest messages may be deleted. By predetermining a number of messages that can be stored in the memory, the system may be more efficiently maintained.

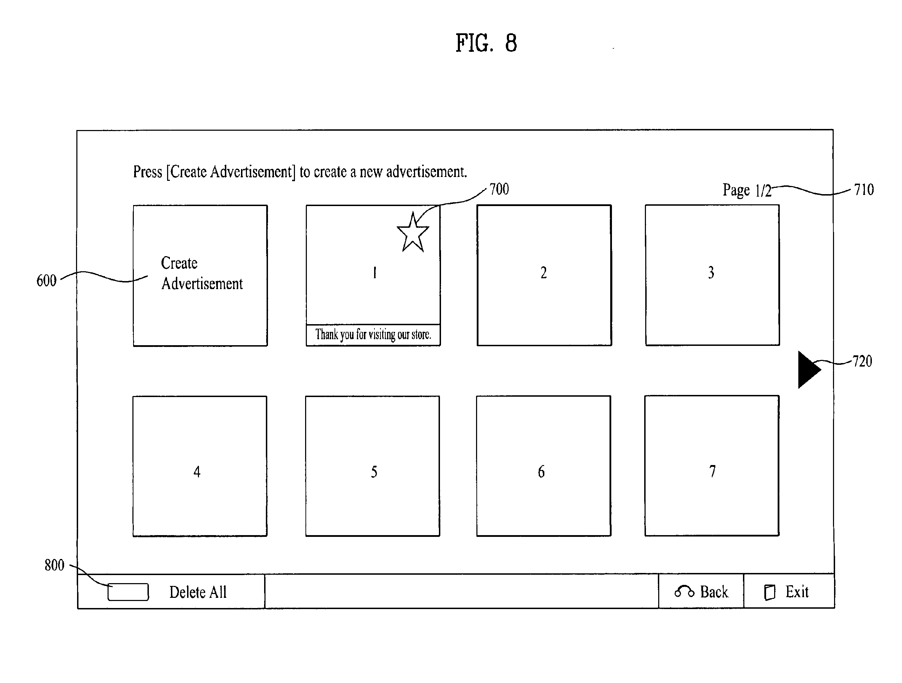

FIG. 8 corresponds to an embodiment performed when advertisement function 153 is selected in FIG. 3. As shown in FIG. 8, a Create Advertisement menu 600, which may generate a message when the advertisement function 153 is selected as the function of the message in (a) of FIG. 3, is shown along with the previously (or already) composed messages (Message 1 to Message 7).

A new message may be created by clicking on the Create Advertisement menu 600. And, at this point, the message may be generated by including at least one of text, sound, drawing, photo, moving picture, and multimedia.

Most particularly, among the previously composed messages (Message 1 to Message 7), a message 700, which is configured as a current advertisement screen and executed, may be marked separately. And, the message configured as the current advertisement screen is always positioned as Message 1, thereby providing convenience to the user by enabling the user to immediately identify Message 1 as the advertisement message that is currently being executed.

Additionally, Page numbering 710 may be displayed, and when a large number of composed messages are stored, an arrow 720 is displayed, so as to allow the user to turn pages. Furthermore, when there is an excessive number of composed advertisement messages or when there are a large number of non-executed advertisement messages, a Delete menu 800 enabling all messages to be deleted may be provided.

A new message may be created by using the Create Advertisement menu 600. The description for this embodiment may be similar to the description for the previous embodiment in terms of these aspects.

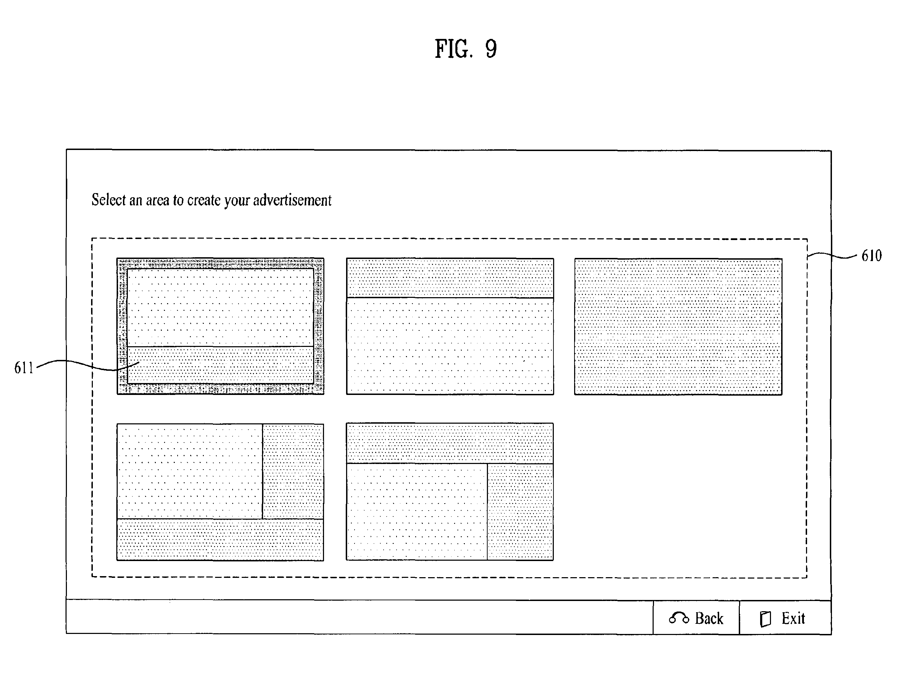

FIG. 9 shows one embodiment of a process of providing a template from a template provider related to a frame of a screen. In this embodiment, when the user selects the Create Advertisement menu 600 in FIG. 8, a display area in which the generated message is to be displayed shall first be decided. Accordingly, a template provider 180 may provide a template for a frame of a screen related to a layout of the decoded video data and the message. As shown in FIG. 9, a Frame List 610 is provided, so as to provide the user with a selection of frames, which are to be selected by the user.

The Frame List 610 shown in FIG. 9 is merely exemplary. In other embodiments, frame lists having different formats may be provided. In addition to the template related to the frame of the screen shown in FIG. 9, the template provider 180 may also provide a template, in which the user may change a frame of the screen within a predetermined range using user interface 130.

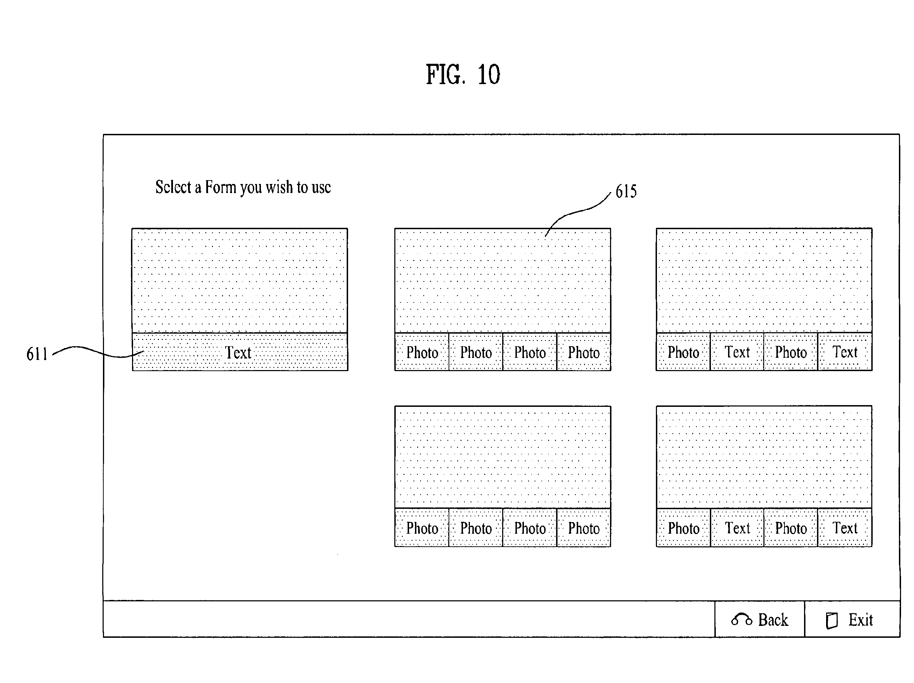

FIG. 10 shows an exemplary process of providing a template related to the frame of a screen and related to elements of a message respective to the frame of the screen. More specifically, FIG. 10 shows an example of providing a template which can position message elements with respect to the frame 611 selected by the user. Therefore, in this embodiment, the user may receive and select diverse layouts within the advertisement creation area and message elements may be inserted in a selected layout, thereby creating an advertisement.

In accordance with at least one embodiment, an "advertisement" may refer to a message and elements within the message may include one or more of text, sound, drawing, photo, moving picture, or other types of multimedia content. Although the example of FIG. 9 shows text or photos as message elements, other elements that can configure an advertisement message may also be included.

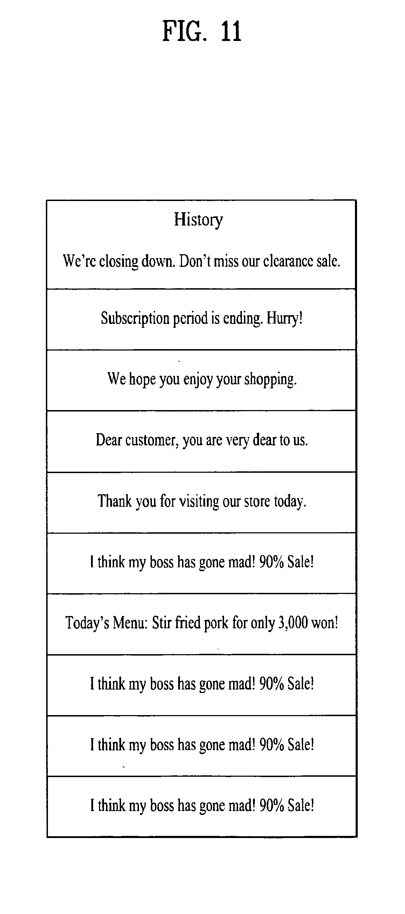

FIG. 11 shows another embodiment of a process of providing a template from a template provider related to the content of a message. In this embodiment, an example of selecting a layout 613 which only includes text as a message element is considered.

More specifically, the template provider 190 may provide a template on the contents of the message. Although FIG. 11 shows an example of the contents of a message provided by the template provider 190, which are stored in a History of contents previously composed by the user so as to be reused and provided. However, even though the user has not stored any previously composed messages, the template provider 190 may provide basic messages which are available to the user.

In case of advertisement messages, may display a message containing contents of a Special Price Event may be used to be displayed on a display device, which is installed outside a restaurant, store, or shop, along with a current broadcast program, in order to attract potential customers, who are walking down the street, into the restaurant, store, or shop. Or, such advertisement messages have a greater effect when presenting a Today's Special Price on the display device installed inside the restaurant, store, or shop, or when sending out Thank You messages to the customers, while the visiting customers are viewing the current broadcast program.

As described above, since such messages tend to use a series of fixed sentences, the template provider 190 may provide a template related to such message contents, so that the users can quickly compose and send out appropriate messages.

Also, as shown in FIG. 5, previously composed messages may also be edited and used for advertisement messages. Therefore, the present embodiment may be advantageous in that the user may select a message content provided by the template provider 190, and that the user may adequately edit the pre-stored content so as to create a new message and to user the newly created message.

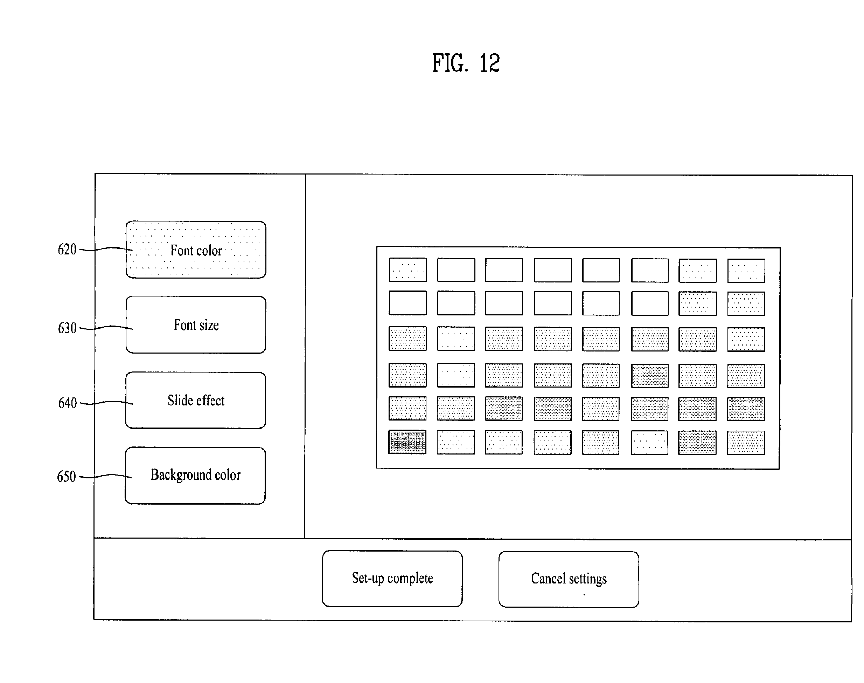

FIG. 12 shows one embodiment of a process for providing a template from a template provider related to a message effect. This figure shows an exemplary template for showing a text effect, among the elements of a message. The contents of a message may convey different meanings or impressions to the viewer (or user), depending upon the displayed size or color of the letters (or font) and sentences. As shown in FIG. 12, a template that can set up font color 620, font size 630, slide effect 640, and background color 650 may be provided, so that the message can be efficiently conveyed.

A template related to slide effect, inversion effect, black and white effect, and so on may be provided for picture messages or photo messages. And, a template providing diverse effects, such as the black and white effect, drawing effect, and so on, may also be provided for moving picture messages.

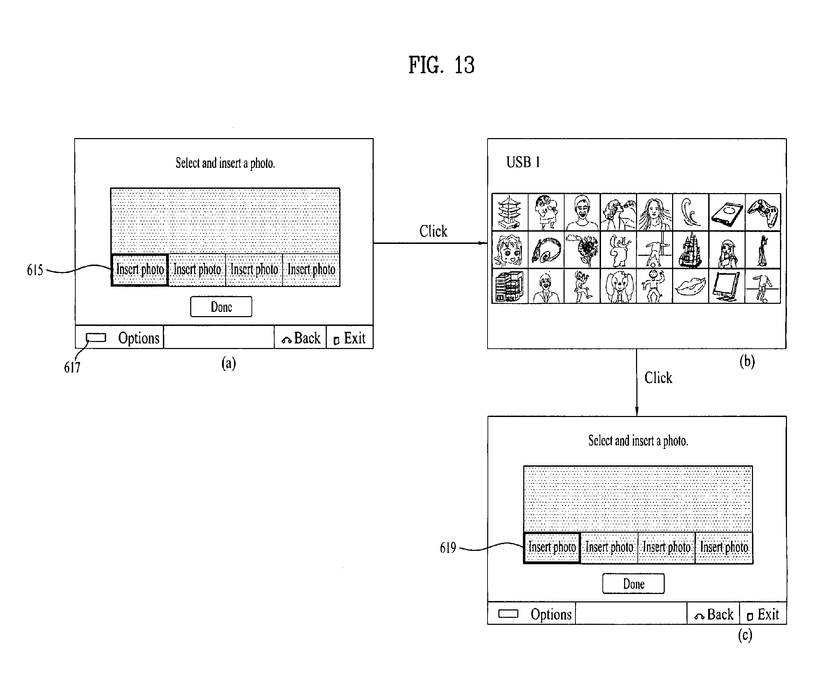

FIG. 13 shows an embodiment of a process for generating a message that includes one or more photos (or pictures). As shown in (a) of FIG. 13, a layout 615 of the message is selected, with the message being configured only of photos. Herein, the layout 615 may include a basic Options menu 617.

The basic Options menu 617 corresponds to a menu displaying options that are to be essentially selected, when inserting a photo (or image) in a message. For example, the size of the photo that is to be inserted may be adjusted. And, since a background color is required in order to fill out any gap that may occur, when the size of inserted image (or photo) is adjusted, an option for selecting the background color of the inserted photo may be provided.

Also, options allowing the user to select the inserted position of the image, such as whether or not the user wishes to insert the image only in a designated position, or whether or not the user wishes to align a plurality of inserted images in predetermined positions by the order of insertion, or options allowing the user to decide the layout of the inserted images.

Additionally, an option for selecting a space in which the corresponding image is to be inserted may be provided. Herein, (b) of FIG. 13 shows an example of selecting an image among a plurality of images stored in a USB memory. Alternatively, in addition to the USB memory, the images that are to be inserted may also be selected from a predetermined folder within the display device. The user may also select images from all sources including neighboring (or peripheral) devices that are connected to the multimedia device 100.

In (c) of FIG. 13, an example of a specific image 619 is shown as being selected from the plurality of images shown in (b) of FIG. 13, thereby being inserted. When all of the images are inserted, each image may seem to be fixed to its respective position, or the inserted images may be repeatedly displayed while moving from left to right with a slide effect.

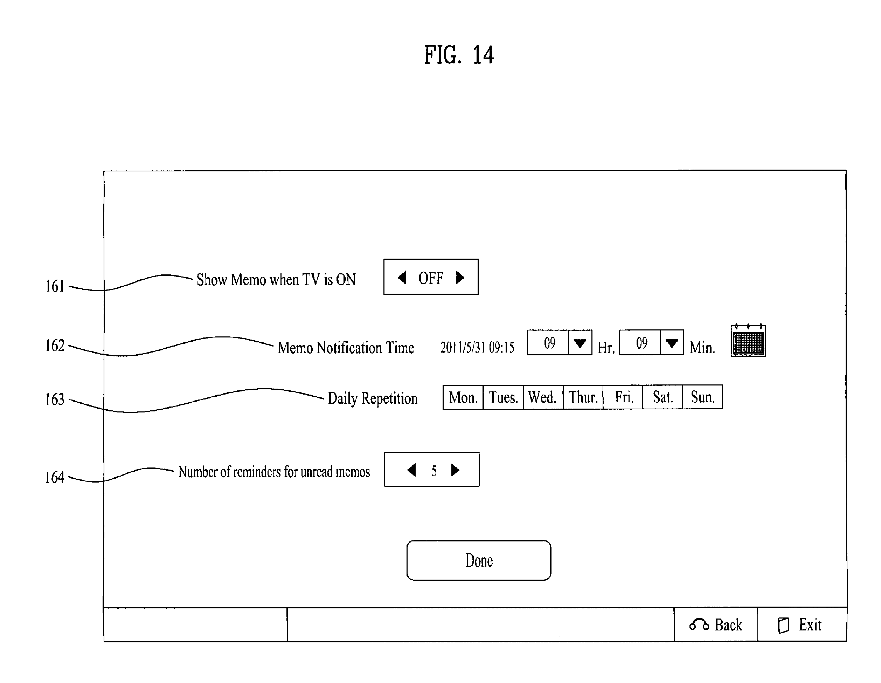

FIG. 14 shows one embodiment of a set-up unit 160 in which memo function 151 of FIG. 3 is selected. The set-up unit 160 configures (or sets up) conditions according to which the messages are executed (i.e., message execution condition).

Herein, the conditions for executing messages may include at least one of a date 162 on which the message is executed, a time 162 at which the message is executed, a number of repeated executions 164 of the message, a cycle period 163 according to which the message is repeatedly executed, and a power status of the multimedia device according to which the message is executed 161 (or an execution status 161 of the multimedia device based upon the power status of the multimedia device). In addition to the execution conditions shown in FIG. 14, the conditions that can be set up with respect to message execution may belong to other embodiments.

The execution status 161 of the multimedia device based upon the power status of the multimedia device corresponds to a condition enabling a message to be executed when the multimedia device 100, e.g., a TV receiver is turned on. Therefore, when settings are made so that a message can be executed each time the power of the TV is turned on, the execution conditions, such as the time 162 at which the message is executed and the number of repeated executions 164 of the message, e.g., condition related to one or more specific days of the week during which the corresponding message is to be executed (or displayed), are not required to be set-up.

Accordingly, when a memo notification option is set to be turned 'ON', when the TV is turned ON, as shown in FIG. 14, the memo notification time 162 and day-of-the-week repetition 163 items may be deactivated. Alternatively, when the memo notification option is set to be turned 'OFF', when the TV is turned ON, the memo notification time 162 and day-of-the-week repetition 163 items may be activated, so that the user can input settings for executing the corresponding message at one or more specific days of the week and time of the day.

When the current status corresponds to the predetermined execution condition, the mixer 170 mixes the decoded video data and the stored message. And, the controller 190 controls the multimedia device so that the mixed video data and message can be outputted to the display screen.

Meanwhile, when the user seeks to execute a message in accordance with the execution condition, the power of the multimedia device may be turned off. In this case, the user may execute the message by turning on the multimedia device. As described above, in order to execute a message based upon the power status of the multimedia device 100, the multimedia device 10 may further include a timer (not shown), which is configured to provide real-time time information, and a power supply unit (not shown), which is configured to supply power for operating the timer.

For example, a Real-Time Clock (RTC) providing the current time information may be used as the timer. And, the power supply unit may be embedded in the timer, or may be provided separately, in order to supply power to the timer, even when the TV is turned off, so that the timer can maintain accurate time information.

Accordingly, when the current time information received from the timer corresponds to the message execution condition, the mixer 170 mixes the mixes the decoded video data and the stored message. And, the controller 190 may output the mixed video data and message to the display screen.

However, when the power of the multimedia device 100 is turned OFF, the controller 190 may refer to the memory 140 at constant time intervals in order to verify whether or not a stored message exists. At this point, although the power of the display screen is turned on, external power is still supplied to the multimedia device 100. Therefore, a predetermined amount of operating voltage may be supplied to the controller 190. After verifying the memory 140, when it is determined that a stored message exists, a comparison is made between the execution time of the stored message and the current time information.

Then, when it is determined that the execution time of the checked message is the same as the current time, the controller 190 switches the power status of the display screen from OFF to ON. Thereafter, the mixer 170 mixes the decoded video data and the stored message. And, the controller 190 controls the multimedia device so that the mixed video data and message can be outputted to the display screen.

As described above, even if the power of the multimedia device 100 is turned off, when the execution time corresponds to the current time information, by setting up the multimedia device 100 so that the display screen can be turned on at a predetermined time, the message may be automatically executed in accordance with the opening time of the shop, store or restaurant. Also, when the power is turned off, by turning the power on so as to execute the message, it may be more difficult for the user to miss the displayed message.

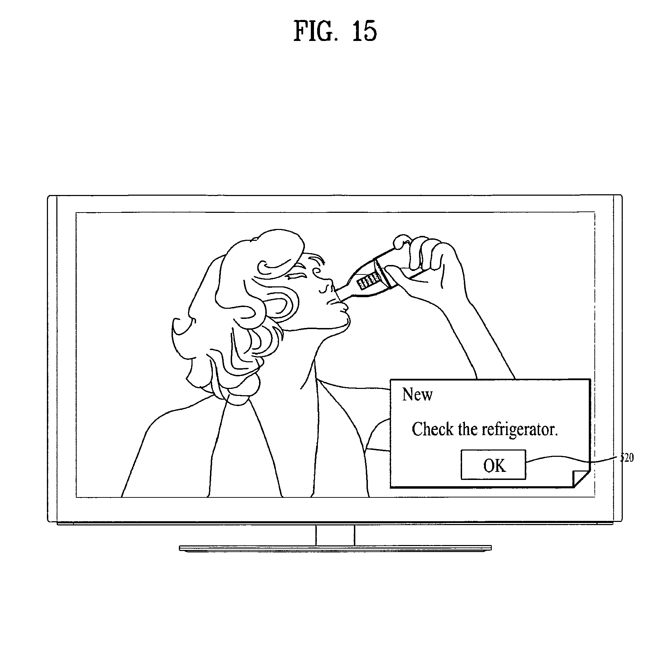

FIG. 15 shows an example of a message being executed by the multimedia device. The message may be one generated when the memo function 151 is selected in FIG. 3. Referring to FIG. 15, when an "OK" button 520 is pressed from the memo, the message disappears. However, if the user does not press the "OK" button 520, the message is displayed for a predetermined period of time (*e.g*., 40 seconds), and then disappears. Then, the same message reappears after another predetermined period of time (*e.g*., 15 minutes). This process may be set to be repeated for a predetermined number of times (*e.g*., 5 times) in accordance with the above-described execution condition.

Furthermore, if the power of the multimedia device is turned off, as the power of the multimedia device is turned on, a message may be executed by using a method similar to that described in FIG. 15.

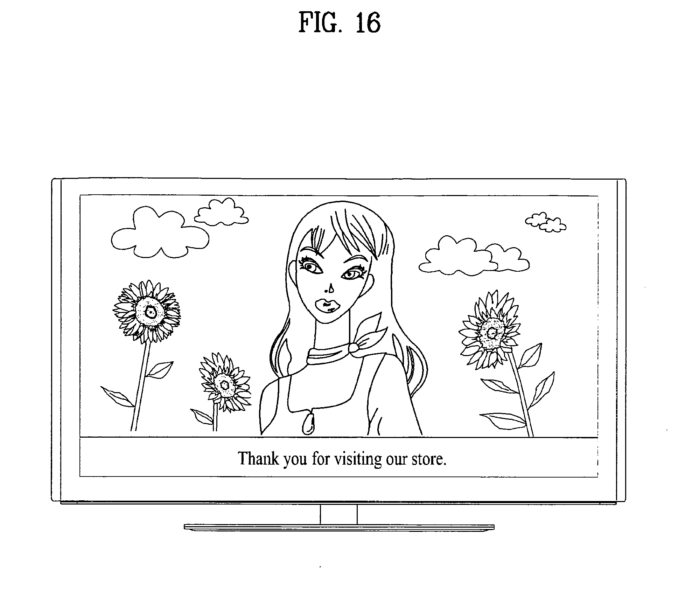

FIG. 16 shows another example of a message being executed by the multimedia device. In this example, the message may be generated when advertisement function 153 is selected in FIG. 3. Unlike the message according to the previous embodiment, which is used to exchange communication between members of a family living in the same household and which is generally created as a one-time memo, the message used in this embodiment may be continuously and repeatedly used for a predetermined period of time.

Additionally, instead of having a fixed target group, the messages having the advertisement functions are mostly targeted to non-specific individuals including visiting customers and potential customers passing by the store, shop or restaurant. Furthermore, since such messages are generally non-reciprocal (i.e., one-way messages), the advertisement messages do not require a separate display of an "OK" button 520, as described in the first embodiment.

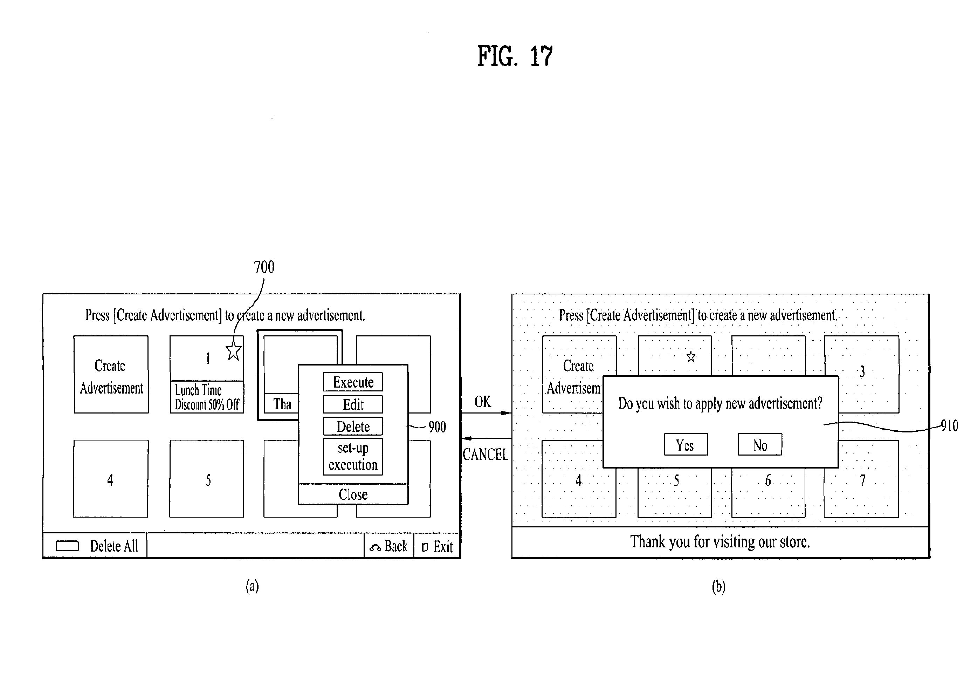

FIG. 17 shows an exemplary process of changing message settings from the set-up unit. In this embodiment, the settings for a message in the form of an advertisement may be changed from the set-up unit shown in FIG. 8.

As described in FIG. 8, the advertisement message set up as the current advertisement screen is always positioned in position No. 1. Thus, the corresponding advertisement message may be separately marked 700 so as to be noted as the message, which is set-up and executed as the current advertisement screen.

However, when the user wishes to input new settings so that a newly created message or a previously stored message can be displayed as the current advertisement screen, a template 900 for changing the settings may be provided, as shown in (a) of FIG. 17.

When the user uses the template 900 in order to select an 'Execute' menu for a message (Message 2), which is to be reconfigured as the current advertisement screen, a pop-up window 910, which is configured to verify whether or not the user wishes to execute the application of the new advertisement, is displayed as shown in (b) of FIG. 17. Then, when the user selects "OK", the selected advertisement message is placed in slot number 1, thereby being newly determined as the current advertisement screen.

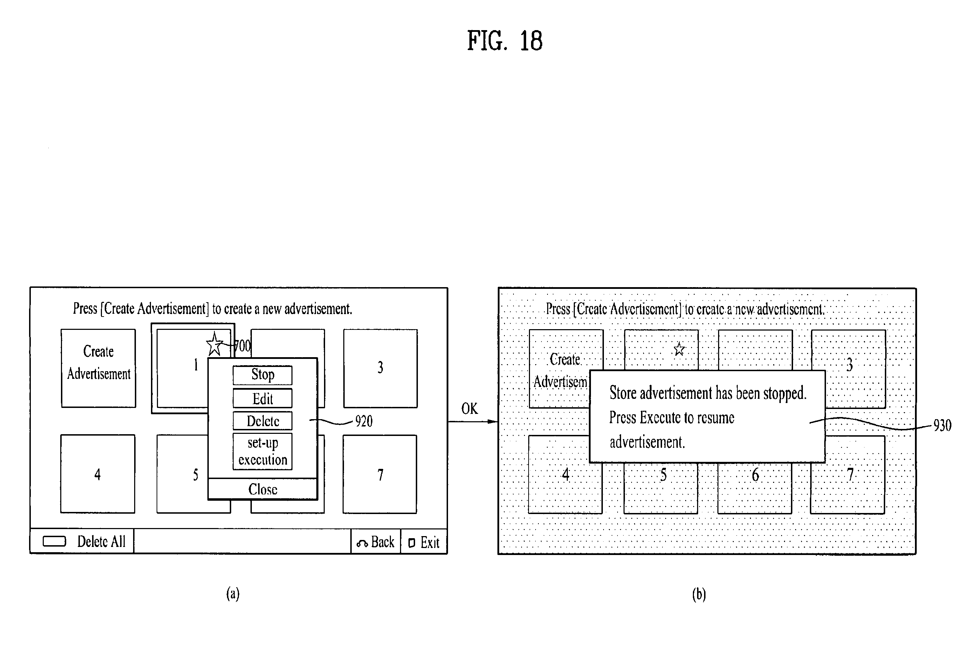

FIG. 18 shows another process of changing message settings from the set-up unit. Unlike in FIG. 17, FIG. 18 shows an example of stopping the display of the message, which is determined as the current advertisement screen. Therefore, the message that is set-up as the current advertisement screen is marked 700 so as to indicate that it is being displayed. As shown in (a) of FIG. 18, a template 920 enabling the user to change settings may be provided.

When the user selects a 'Stop' menu for the message (Message 1), which is set up as the current advertisement screen, the message settings are changed, and a pop-up message 930 notifying that the advertisement has been stopped is displayed, as shown in (b) of FIG. 18.

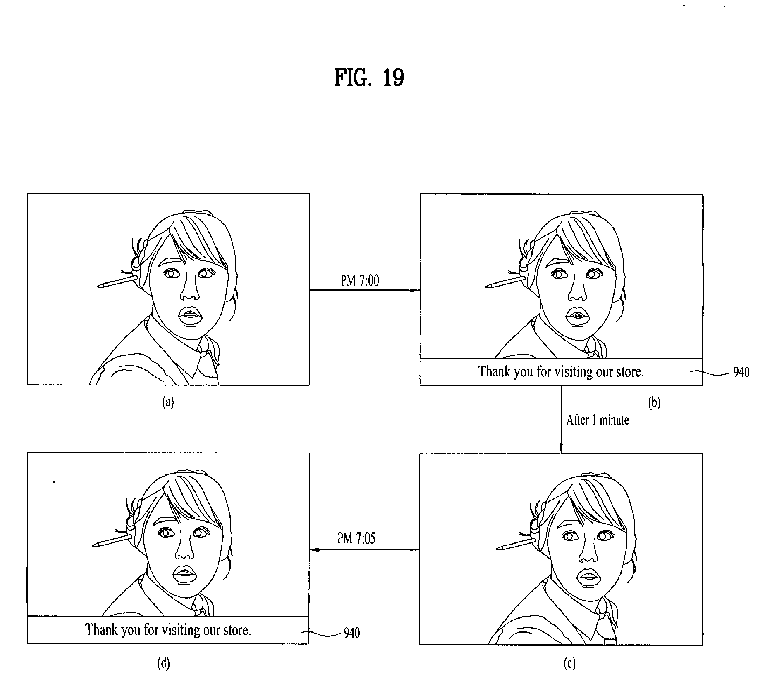

FIG. 19 shows one embodiment of a multimedia device that performs message execution conditions configured by the set-up unit. In the embodiment, it may be assumed that settings are made in the set-up unit 160 so that a message 940 having the advertisement function is executed (or displayed) from 7:00 p.m. to 9:00 p.m., at an interval of 5 minutes.

As shown in (a) of FIG. 19, the current broadcast program is being displayed until 7:00 p.m. Then, the programmed message 940 is displayed (or executed) starting from 7:00 p.m. Herein, the message execution time is set to 1 minute. Then, when the period of 1 minute is elapsed, the message stops being displayed. Since the message execution cycle period is set to 5 minutes, the message 940 will be displayed once again at 7:05 p.m.

Meanwhile, the user interface 130 uses the signal received from the remote controller to input a command to the generator 150. Most particularly, in case of the user, even though a key input button is not provided in the remote controller 200, the user may use a virtual keyboard, by simply moving the remote controller 200, thereby being capable of creating and editing messages. Accordingly, the user convenience may be enhanced.

In order to do so, the remote controller 200 may use Bluetooth, radio frequency (RF) communication, infrared (IR) communication, Ultra Wideband (UWB), ZigBee, and so on. Hereinafter, the remote controller 200 will be described in more detail with reference to FIG. 20 and FIG. 21.

FIG. 20 shows external features of a remote controller controlling a multimedia device. In this example, (a) of FIG. 20 shows an example wherein a pointer 201 corresponding to the remote controller 2000 is displayed on the multimedia device 100. Furthermore, for example, the display unit 191 shown in FIG. 20 corresponds to the display unit of the multimedia device 100 shown in FIG. 2.

The user may move or rotate the remote controller 200 in an up-and-down (vertical) direction, a left-to-right (horizontal) direction (as shown in (b) of FIG. 20), and a back-and-forth direction (as shown in (c) of FIG. 20). The pointer 201 displayed on the display unit 191 of the multimedia device 100 corresponds to the motion of the remote controller 200. As shown in FIG. 20, since the corresponding pointer 201 moves in accordance with the motion of the remote controller 200 within a 3 dimensional (3D) space, the above-described remote controller 200 may also be referred to as a space remote controller.

In (b) of FIG. 20, an example is shown wherein, when the remote controller 200 moves leftwards, the pointer 201 displayed on the display unit 191 of the multimedia device 100 also moves leftwards with respect to the motion of the remote controller 200.

Information on the motion of the remote controller 200 detected by a sensor of the remote controller 200 is transmitted to the multimedia device 100. The multimedia device 100 may calculate (or compute) coordinates of the pointer 201 from the information on the motion of the remote controller 200. The multimedia device 100 displays the pointer 201 respective to the calculated coordinates.

In (c) of FIG. 20 shows an example wherein the user moves the remote controller 200 further away from the display unit 191 of the multimedia device 100 while pressing on a specific button within the remote controller 200. Accordingly, the selected area within the display unit 191 corresponding to the pointer 201 may be zoomed-in so as to be displayed in a more enlarged size. Conversely, in case the user moves the remote controller 200 closer to the display unit 191, the selected area within the display unit 191 corresponding to the pointer 201 may be zoomed-out so as to be displayed in a more reduced size.

Therefore, when using the remote controller 200 shown in FIG. 20, options such as Select Menu, Write Message, Edit Message, and so on may be quickly and conveniently selected from the screen shown in FIG. 3, FIG. 4 to FIG.6, and FIG. 9 to FIG. 14.

FIG. 21 shows an example of the internal configuration of the remote controller shown in FIG. 20. As shown in FIG. 21, the remote controller 200 includes a wireless communication unit 210, a user input unit 220, a sensor unit 230, an output unit 240, a storage unit 250, a power supply unit 260, and a control unit 270.

The wireless communication unit 210 transmits and receives signals to and from the above-described multimedia device as described herein. According to one embodiment, remote controller 200 may be equipped with a radio frequency (RF) module 211, which can transmit and receive signals to and from the multimedia device 100 in accordance with an RF communication standard. Additionally, the remote controller 200 may be equipped with an infrared (IR) module 213, which can transmit and receive signals to and from the multimedia device 100 in accordance with an IR communication standard.

According to one embodiment, remote controller 200 may transmit signals carrying information on the motions of the remote controller 200 to the multimedia device 100 through the RF module 211. Also, the remote controller 200 may receive a signal transmitted from the multimedia device 100 through the RF module 211. And, whenever required, remote controller 200 may transmit commands associated with power on/off, channel change, volume change, and so on to the multimedia device 100 through the IR module 213.

The user input unit 220 may be configured of a keypad, buttons, a touchpad, or a touch screen. The user may manipulate the user input unit 220 so as to input a command associated with the multimedia device 100 to the remote controller 200. Additionally, the sensor unit 230 may be equipped with a Gyro sensor 231 or an acceleration sensor 233.

For example, the Gyro sensor 231 may sense the information associated to the motions of the remote controller 200 based upon x, y, and z axes. And, the acceleration sensor 233 may sense information associated with a movement speed of the remote controller 200. Meanwhile, the acceleration sensor 233 may be further equipped with a distance measurement sensor. And, by using the distance measurement sensor, the acceleration sensor 233 may sense the distance between the remote controller 200 and the multimedia device 100.

The output unit 240 may output a video signal or an audio signal either corresponding to the manipulation of the user input unit 220 or corresponding to the signal transmitted from the multimedia device 100. The user may recognize whether or not the user input unit 220 has been manipulated or whether or not the multimedia device 100 has been controlled through the output unit 240.

For example, when the user input unit 220 is manipulated, or when a signal is transmitted and received to and from the multimedia device 100 through the wireless communication unit 210, the output unit 240 may be provided with an LED module 241 that is enlightened, an oscillation module 243 that generates oscillation, a sound output module 245 that outputs sound, or a display module 247 that outputs images.

The storage unit 250 may store diverse types of programs, application data, and so on that are required for controlling or operating the remote controller 200. And, if the remote controller 200 receives and transmits signals via wireless communication through the multimedia device 100 and the RF module 211, the remote controller 200 and the multimedia device 100 may transmit and receive signals through a predetermined frequency band.

The power supply unit 260 supplies power to the remote controller 200. In case the remote controller 200 does not move for a predetermined period of time, by ceasing (or stopping) the power supply, the power supply unit 260 may reduce a wasted amount of power. The power supply unit 260 may resume the power supply, when a predetermined key provided in the remote controller 200 is manipulated.

Finally, the control unit 270 performs the overall functions associated with the control of the remote controller 200. Herein, the control unit 270 may transmit a signal corresponding to a predetermined key manipulation of the user input unit 220 or a signal corresponding to the movements of the remote controller 200 sensed by the sensor unit 230 to multimedia device 100 through the wireless communication unit 210.

Most particularly, the control unit 270 may be designed to control the RF module 211 or the IR module 213, so as to transmit an input signal related to the message displayed on the display unit 191 of the multimedia device 100 to the multimedia device 100. As described above, since a command respective to a specific movement of the remote controller 200 may be transmitted, the present invention has a unique advantage of enabling the user to accurately select any one of the neighboring areas.

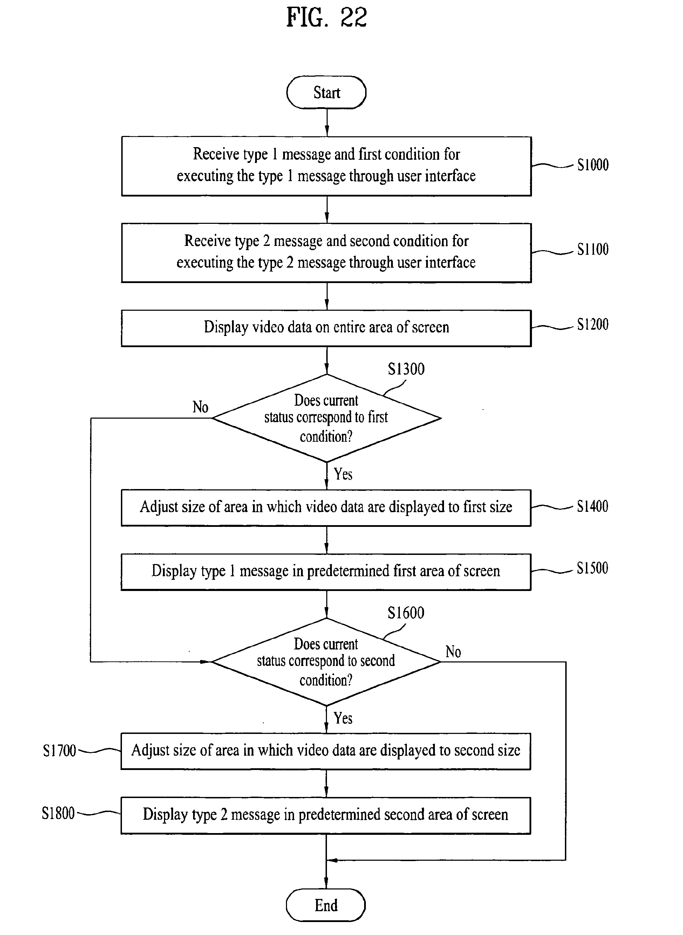

FIG. 22 shows an embodiment of a method for controlling a multimedia device.

According to this method, the multimedia device receives a type 1 message and a first condition for executing the type 1 message through the user interface (S1000), and the multimedia device also receives a type 2 message and a second condition for executing the type 2 message through the user interface (S1100).

The first condition or the second condition may include at least one of conditions for executing messages may include at least one of a date on which a message is executed, a time at which the message is executed, a number of repeated executions of the message, a cycle period according to which the message is repeatedly executed, or a power status of the multimedia device according to which the message is executed (or an execution status of the multimedia device based upon the power status of the multimedia device). The type 1 message and the type 2 message corresponds to any one or more of text, sound, picture (drawing), photo (still image), moving picture, or multimedia.

Then, the multimedia device determines whether or not a current status corresponds to the first condition (S1300). Then, when the current status corresponds to the first condition, the multimedia device adjusts a size of an area in which the video data are displayed to a first size (S1400), and then the multimedia device displays the type 1 message in a predetermined first area of the screen (S1500).

Subsequently, the multimedia device determines whether or not a current status corresponds to the second condition (S1600). Then, when the current status corresponds to the second condition, the multimedia device adjusts a size of an area in which the video data are displayed to a second size (S1700), and then the multimedia device displays the type 2 message in a predetermined second area of the screen (S1800).

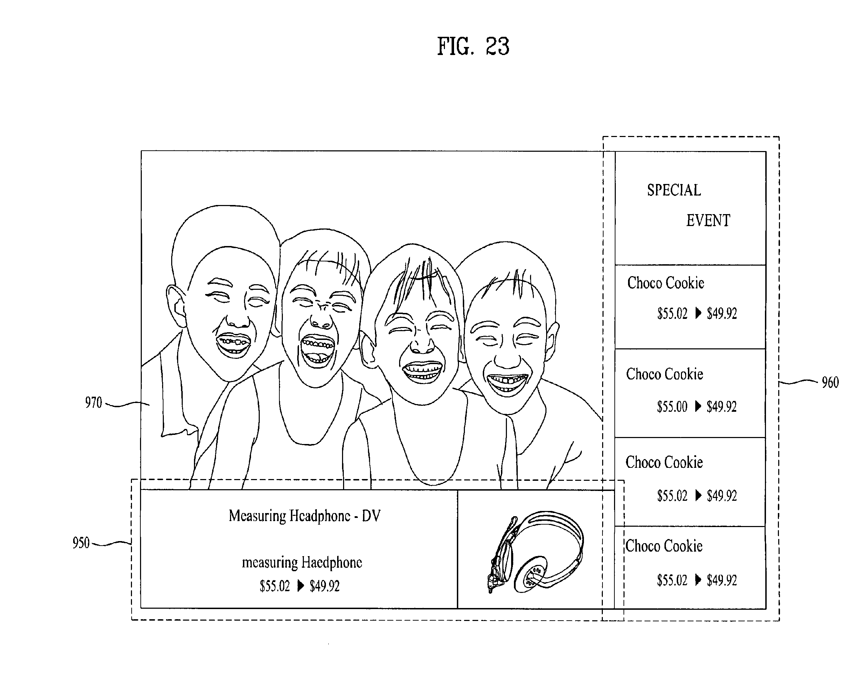

FIG. 23 shows an example of a message displayed in a first area and a second area of the multimedia device according to one embodiment. As shown in FIG. 23, the video data area 970 is displayed without having any area covered or blocked by the first area 950 and the second area 960. As shown in FIG. 23, the positions occupied by the first area 950 and the second area 960 within the screen and the size of each area 950 and 960 are merely exemplary. And, therefore, such details may be varied in accordance with user settings, which are inputted by the user in advance.

As described above, one or more embodiments described herein may adjust a size of a display area in which the video data is to be displayed, where the video data is displayed in full without any portion thereof being blocked by a message, to thereby provide users with a clear and full view of the video data.

When adjusting the size of the display area to a first size or a second size, the display ratio of the display screen may be adjusted and maintained so as to prevent distortion from occurring in the video data. The display area may be adjusted, for example, to area in which video data is displayed. The adjustment may involve changing the video data from one aspect ratio to another, which ratios include but are not limited to a 4:3 ratio and a 16:9 ratio as well as others.

Also, at this point, if the first condition or the second condition is related to time information, when performing the method for controlling the multimedia device, the multimedia device receives a real-time time information from a timer, and the multimedia device refers to a memory so as to determine whether or not the first condition or the second condition corresponds to the real-time time information.

Furthermore, when the multimedia device is in a power off state, the multimedia device may receive a real-time time information from the timer and may refer to the memory so as to determine whether or not the first condition or the second condition corresponds to the real-time time information. Then, when it is determined that the first condition or the second condition corresponds to the real-time time information, the multimedia device may shift the power status of the display unit to a power on state.

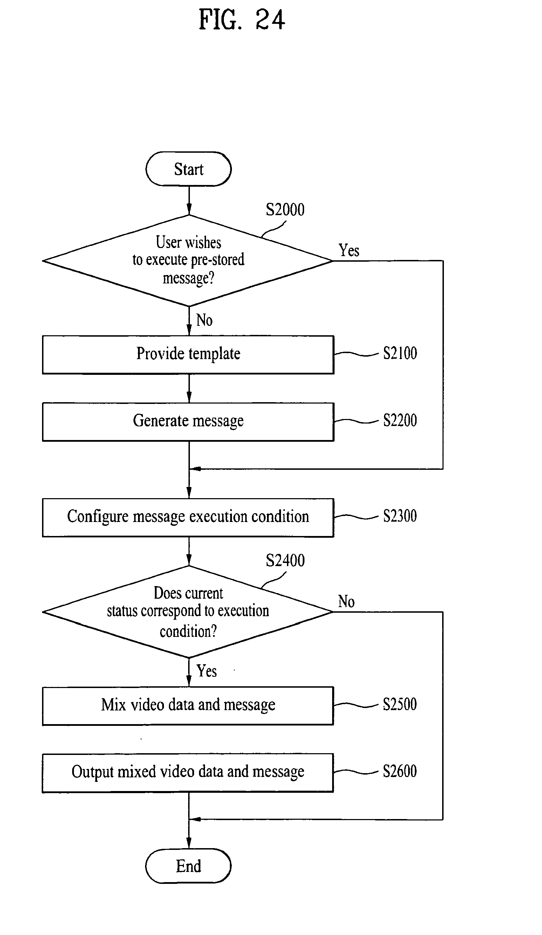

FIG. 24 shows another embodiment of a method for controlling a multimedia device. In this method, the multimedia device receives a select signal relating to whether the user seeks to display (or execute) a pre-stored message or whether the user seeks to create (or generate) a new message from the user interface (S2000).

When it is determined that the user seeks to create a new message (S2000-No), the multimedia device provides a template related to at least one of the contents of a message, elements of the message, size of the area in which the message is displayed, and a frame within the screen related to a layout (or positioning) of the decoded video data and the message (S2100).

When data corresponding to the elements of the message and the contents of the message are received from the user by using the template, a new message is created (S2200), and a condition for executing (or displaying) the newly created message is configured (S2300).

Alternatively, when it is determined that the user seeks to use a pre-stored message (S2000-Yes), the multimedia device may reconfigure the conditions for executing (or displaying) the pre-stored message (S2300). A template, for example, may be provided to enable the user to configure the execution conditions.

Meanwhile, the network interface of the multimedia device receives a broadcast signal including audio data and video data. Thereafter, the audio data and the video data, which are included in the received broadcast signal, are demultiplexed and decoded.

Thereafter, the multimedia device determines whether or not a current status corresponds to the execution condition of the selected message (S2400). Then, if it is determined that the current status corresponds to the execution condition, the decoded video data and the stored message are mixed (S2500), and the mixed video data and message are outputted (S2600).

A computer-readable medium may be provided to store a program including code for executing the functions or operations of any of the embodiments described herein. The computer-readable medium may be a flash memory or an internal memory including a RAM, ROM, EEPROM or another type of storage device.

One of more embodiments described herein, therefore, provide the user with a multimedia device having a display screen which displays a program or other type of broadcast signal with one or more messages, without blocking or distorting the display area corresponding to the program or broadcast signal.

One or more embodiments herein may provide a multimedia device that can simultaneously provide a broadcast signal and a screen wanted by the user.

One or more embodiments herein may provide a multimedia device that can define a data template for simultaneously providing a broadcast signal and a screen wanted by the user.

One or more embodiments herein may provide an interface enabling the user to easily control the multimedia device by using the remote controller, when simultaneously providing a broadcast signal and a screen wanted by the user.

In one embodiment, the multimedia device allows a user to generate a personalized or custom message for members of his or her family.

In another embodiment, the multimedia device displays a message in the form of an advertisement for viewing in a restaurant, shop, or store.

In another embodiment, an interface is provided to allow a user to generate a personalized or custom message or advertisement using, for example, a remote controller or other control device external or internal to the display device.

In another embodiment, code may be stored in on a recording medium that can be read and executed by a processor provided in or coupled to the image display device in a recording medium. As previously indicated, the recording medium may be any one of a number of recording devices for storing data. Examples include ROMs, RAMs, CD-ROMs, magnetic tapes, floppy disks, optical data storing devices, and so on. Also, the medium may be in the form of a signal or carrier wave such as a transmission via Internet or other network. Also, the recording medium that can be read by a processor may be scattered within a computer system, which is connected through a network, and a code that can be read by the processor may be stored and executed by using a dispersion (or scattering) method.

In another embodiment, a multimedia device is provided to include a network interface configured to receive a broadcast signal, the broadcast signal including audio data and video data, a demultiplexer configured to demultiplex the audio data and video data included in the received broadcast signal, an audio decoder configured to decode the demultiplexed audio data, a video decoder configured to decode the demultiplexed video data, a generator configured to generate a message in accordance with a command inputted through a user interface, a set-up unit configured to configure a condition for executing the message, a memory configured to store the generated message and the configured execution condition, a mixer configured to mix the decoded video data and the stored message, in case a current status corresponds to the execution condition, and a controller configured to perform control operations so that the mixed video data and message can be outputted to a screen.

In another embodiment, a method for controlling a multimedia device includes receiving a type 1 message and a first condition according to which the type 1 message is executed, through a user interface, receiving a type 2 message and a second condition according to which the type 2 message is executed, through the user interface, displaying video data on an entire area of a screen, when a current status corresponds to the first condition, adjusting a size of an area in which the video data are displayed to a first size, and displaying the type 1 message in a predetermined first area of the screen, and, when a current status corresponds to the second condition, adjusting a size of an area in which the video data are displayed to a second size, and displaying the type 2 message in a predetermined second area of the screen.

In another embodiment, an apparatus for a television comprises a tuner to receive broadcast signals; a first interface for coupling to a network; a second interface to receive command signals; a first storage area to store a plurality of messages; a second storage area to store set-up information for messages; and a processor to generate a message based on at least one command signal received through the second interface and to control output of the generated message based on the set-up information stored in the second storage area, wherein content of the message is controlled based on the at least one command signal received through the second interface and wherein the set-up information provides a condition for outputting the message. The apparatus may be included in the television or may be coupled to the television through an appropriate wired or wireless interface.

The condition may correspond to power on of the television, a time or time period indicated by the at least one command signal, or a day or date. The condition may also or alternatively provide an indication of message repetition.

The processor may include a mixer to generate the message to include at least two of text, graphics, a still image, video or moving images, or sound. Also, the processor may generate the message to include advertisement or customer-related information designated based on the at least one command signal, and/or may output information indicative of the messages stored in the first storage area, each of the messages generated by the processor based on command signals received through the interface. A first message may be output based on a first condition, and a second message may be output based on a second condition which is different from the first condition.

In another embodiment, a method for controlling a television includes receiving set-up information for controlling output of a message; receiving at least one command signal through an interface; generating the message based on the at least one command signal received through the interface; and controlling output of the generated message based on the set-up information, wherein content of the message is controlled based on the at least one command signal received through the interface and wherein the set-up information provides a condition for outputting the message.

The condition may correspond to power on of the television, time or time period indicated by the at least one command signal, or a day or date. The condition may also or alternatively provide an indication of message repetition. The set-up information may include reminder information, and generating the message may include outputting at least one template to be used in defining at least one of the content or format of the message.

The method may also include outputting information indicative of a plurality of stored messages on the screen, wherein the messages are generated based on command signals received through the interface and wherein different set-up information is to be used in controlling output of at least two of the messages.

In another embodiment, an apparatus for a television may include a first interface for coupling to a network; a second interface to receive command signals; a first storage area to store a plurality of messages; a second storage area to store set-up information for messages; and a processor to generate a message based on at least one command signal received through the second interface and to control output of the generated message based on the set-up information stored in the second storage area, wherein content of the message is controlled based on the at least one command signal received through the second interface and wherein the set-up information provides a condition for outputting the message.

The condition may include at least one of power on of at least one of the apparatus or television, a time or time period indicated by the at least one command signal, a day or date, or an indication of message repetition.

The processor may include a mixer to generate the message to include at least two of text, graphics, a still image, video or moving images, or sound. Also, the processor may generate the message to include advertisement or customer-related information designated based on the at least one command signal. Also, the processor outputs information indicative of the messages stored in the first storage area, each of the messages generated by the processor based on command signals received through the interface.

While some embodiments correspond to an apparatus for a television, other embodiments may correspond to apparatuses for other types of display devices including but not limited to monitors, computers, mobile devices, as well as others.

More specifically, the multimedia device herein may correspond to, for example, an intelligent display apparatus that is also equipped with a computer supporting function in addition to the broadcast program receiving function. Accordingly, since the display apparatus is committed (or devoted) to its broadcast program receiving function and is also supplemented with an internet browsing function, the display apparatus may be equipped with an interface that can be more conveniently used as compared to an hand-writing type input device, a touch screen or a space remote controller.

Furthermore, being supported with a wired or wireless (or radio) internet function, the display apparatus may be connected to (or may access) the internet and a computer, thereby being capable of performing email transmission, web browsing, internet banking or gaming functions. In order to perform such variety of functions, the display apparatus may adopt a standardized OS for general purpose.

Accordingly, since a variety of applications may be easily added to or deleted from a network TV within an OS kernel for general purpose, the network TV described in the description of the present invention may, for example, be capable of performing a wide range of user-friendly functions.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features of one embodiment may be combined with the features of one or more of the other embodiments.

Although embodiments have been described with reference to a number of illustrative embodiments, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An apparatus for a television comprising:
a tuner to receive broadcast signals;
a first interface for coupling to a network;
a second interface to receive command signals;
a first storage area to store a plurality of messages;
a second storage area to store set-up information for messages; and
a processor to generate a message based on at least one command signal received through the second interface and to control output of the generated message based on the set-up information stored in the second storage area, wherein content of the message is controlled based on the at least one command signal received through the second interface and wherein the set-up information provides a condition for outputting the message.

2. The apparatus of claim 1,
wherein said condition corresponds to power on of the television.

3. The apparatus of claim 1,
wherein said condition corresponds to time or time period indicated by the at least one command signal.

4. The apparatus of claim 1,
wherein said condition is a day or date.

5. The apparatus of claim 1, wherein said condition provides an indication of message repetition.

6. The apparatus of claim 1, wherein the processor includes:
a mixer to generate the message to include at least two of text, graphics, a still image, video or moving images, or sound.

7. The apparatus of claim 1,
wherein the processor generates the message to include advertisement or customer-related information designated based on the at least one command signal.

8. The apparatus of claim 1,
wherein the processor outputs information indicative of the messages stored in the first storage area, each of the messages generated by the processor based on command signals received through the interface.

9. The apparatus of claim 8, wherein:
a first message is to be output based on a first condition,
a second message is to be output based on a second condition which is different from the first condition.

10. A method for controlling a television, comprising:
receiving set-up information for controlling output of a message;
receiving at least one command signal through an interface;
generating the message based on the at least one command signal received through the interface; and
controlling output of the generated message based on the set-up information, wherein content of the message is controlled based on the at least one command signal received through the interface and wherein the set-up information provides a condition for outputting the message.

11. The method of claim 10,
wherein said condition corresponds to power on of the television.

12. The method of claim 10,
wherein said condition corresponds to time or time period indicated by the at least one command signal.

13. The method of claim 10,
wherein said condition is a day or date.

14. The method of claim 10,
wherein said condition provides an indication of message repetition.

15. The method of claim 10,
where the set-up information includes reminder information.

16. The method of claim 10, wherein generating the message includes:
outputting at least one template to be used in defining at least one of the content or format of the message.

17. The method of claim 10, further comprising:
outputting information indicative of a plurality of stored messages on the screen, wherein the messages are generated based on command signals received through the interface and wherein different set-up information is to be used in controlling output of at least two of the messages.

18. An apparatus for a television comprising:
a first interface for coupling to a network;
a second interface to receive command signals;
a first storage area to store a plurality of messages;
a second storage area to store set-up information for messages; and
a processor to generate a message based on at least one command signal received through the second interface and to control output of the generated message based on the set-up information stored in the second storage area, wherein content of the message is controlled based on the at least one command signal received through the second interface and wherein the set-up information provides a condition for outputting the message.

19. The apparatus of claim 18, wherein the condition is at least one of:
power on of at least one of the apparatus or television,
a time or time period indicated by the at least one command signal,
a day or date, or
an indication of message repetition.

20. The apparatus of claim 18, wherein the processor includes:
a mixer to generate the message to include at least two of text, graphics, a still image, video or moving images, or sound.

21. The apparatus of claim 18,
wherein the processor generates the message to include advertisement or customer-related information designated based on the at least one command signal.

22. The apparatus of claim 18,
wherein the processor outputs information indicative of the messages stored in the first storage area, each of the messages generated by the processor based on command signals received through the interface.
